Europäisches Patentamt

(19) European Patent Office   (11) Numéro de publication: **0 057 626**

Office européen des brevets   **B1**

(12)   **FASCICULE DE BREVET EUROPEEN**

(45) Date de publication du fascicule du brevet: **29.05.85**   (51) Int. Cl.⁴: **G 02 B 6/00, F 21 S 5/00**

(21) Numéro de dépôt: **82400097.0**

(22) Date de dépôt: **19.01.82**

(54) **Cible lumineuse prévue pour être utilisée en métrologie optique dans le domaine des mesures tridimensionnelles et méthode de mesure.**

(30) Priorité: **20.01.81 FR 8100938**

(43) Date de publication de la demande:
**11.08.82 Bulletin 82/32**

(45) Mention de la délivrance du brevet:
**29.05.85 Bulletin 85/22**

(84) Etats contractants désignés:
**DE GB IT SE**

(56) Documents cités:
**US-A-3 018 362**
**US-A-3 813 514**

**APPLIED OPTICS, vol. 17, no. 16, 15 août 1978, NEW YORK (US), R.E. PARKS et al. "Bright inexpensive pinhole source", page 2469**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Desmaret, Jean-Pierre**
**36, rue Marie-Louise**
**F-93700 Drancy (FR)**

(74) Mandataire: **Srour, Elie et al**
**REGIE NATIONALE DES USINES RENAULT (S. 0804) 8 & 10 Avenue Emile Zola**
**F-92109 Boulogne Billancourt (FR)**

# Description

La présente invention se rapporte aux sources d'énergie rayonnante ponctuelle et plus particulièrement à la création de cibles lumineuses ponctuelles utilisées en métrologie optique dans le domaine des mesures tridimensionnelles à l'aide de théodolites selon la méthode classique de triangulation optique.

Toute surface ou volume qui émet un rayonnement constitue une source d'énergie rayonnante. Cette source est considérée comme ponctuelle si ses dimensions sont très petites par rapport à la distance qui la sépare du récepteur ou de l'observateur.

L'utilisation d'une fibre optique comme source lumineuse est décrite dans l'article "Applied Optics" 17 (1978), page 2469.

Actuellement, les impératifs de réalisation ou de fabrication des systèmes existants obligent à observer le compromis suivant:

— quand la source est considérée comme ponctuelle, elle ne rayonne que suivant un très faible angle solide;
— le fait d'augmenter cet angle solide impose à la source des dimensions telles qu'elle ne peut plus être considérée comme ponctuelle.

La présente invention permet d'éviter ces inconvénients en proposant une cible lumineuse prévue pour être utilisée en métrologie optique dans le domaine des mesures tridimensionnelles, caractérisée en ce qu'elle comprend au moins une source lumineuse multidirectionnelle élémentaire comprenant une fibre optique contenue sur une partie de sa longueur dans un tube métallique rigide de faible épaisseur et un renflement constitué d'une bille dépolie, faite en une substance capable de transmettre dans de bonnes conditions les rayons lumineux d'une gamme de longueurs d'onde déterminée, emmanchée et collée sur l'extrémité libre de ladite fibre optique, ladite bille étant en polystyrène non expansé, et possédant un diamètre de l'ordre de 0,5 mm, le diamètre de la fibre optique étant de l'ordre de 0,2 mm.

Selon une autre caractéristique d'un mode de réalisation, la cible comprend cinq sources lumineuses multidirectionnelles élémentaires du type mentionné ci-dessus, quatre de ces sources élémentaires étant situées dans un plan deux à deux suivant deux axes de coordonnées rectangulaires, la cinquième source élémentaire étant disposée suivant l'axe perpendiculaire aux deux axes de coordonnées rectangulaires précédents en leur point d'intersection.

D'autres caractéristiques ressortiront de la description qui suit et qui n'est donnée qu'à titre d'exemple. A cet effet, on se reportera aux dessins joints dans lesquels:

— la figure 1 représente en coupe et à un agrandissement de l'ordre de 40 un mode de réalisation d'une source lumineuse multidirectionnelle élémentaire suivant la présente invention:
— la figure 2 représente en perspective une source lumineuse multidirectionnelle composite comprenant cinq sources lumineuses élémentaires suivant la présente invention;
— la figure 3 représente schématiquement un générateur d'énergie lumineuse susceptible d'être associé à l'une ou à l'autre des sources lumineuses multidirectionnelles mentionnées précédemment, et;
— la figure 4 illustre une méthode de mesure tridimensionnelle à l'aide de deux théodolites faisant usage de l'une ou de l'autre des sources lumineuses multidirectionnelles mentionnées précédemment.

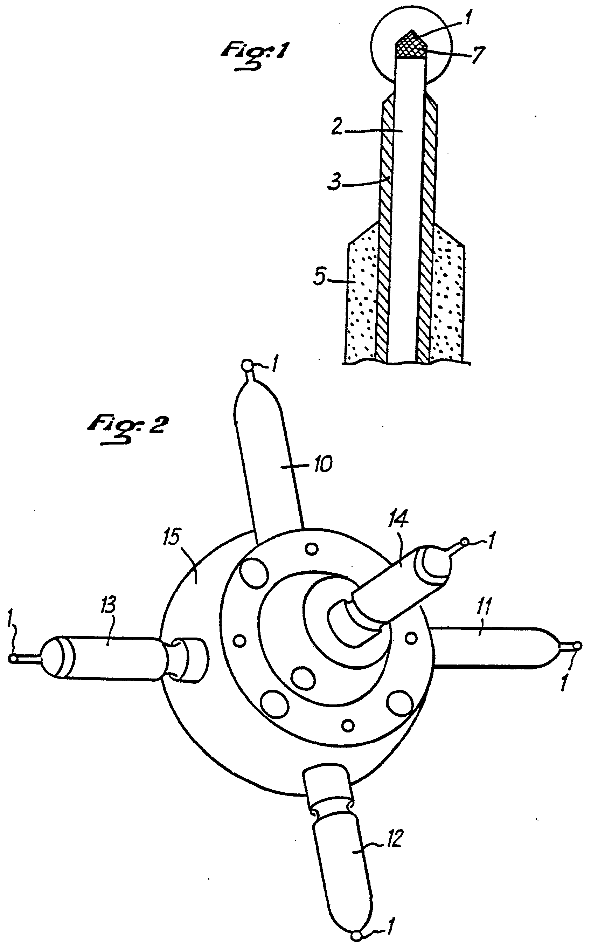

Suivant le mode de réalisation de la figure 1 qui représente en coupe et à un agrandissement de l'ordre de 40 une source lumineuse multidirectionnelle élémentaire suivant la présente invention, celle-ci comprend une bille 1 dépolie en polystyrène non expansé de diamètre 0,5 mm. Le support à la transmission du flux lumineux nécessaire au rayonnement de la bille 1 comprend une fibre optique 2 de diamètre 0,2 mm emmanchée et collée en 7 au centre de la bille 1. La rigidité de la fibre optique 2 est obtenue grâce à l'adjonction d'un tube métallique périphérique 3 de faible épaisseur et d'un corps en plastique extérieur 5 usiné après moulage.

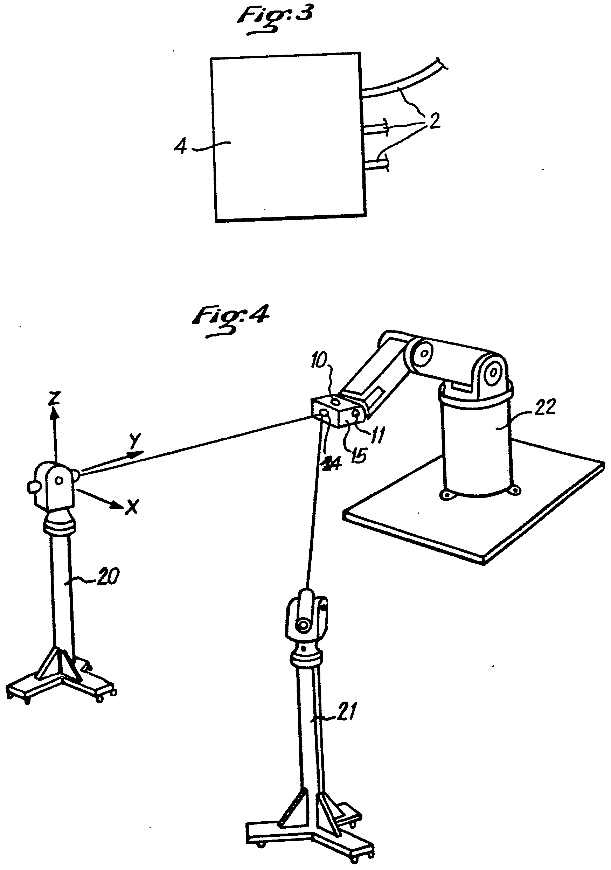

Un générateur d'énergie lumineuse 4 susceptible d'être associé à la source lumineuse multidirectionnelle de la figure 1 est représenté schématiquement à la figure 3. Il possède selon les besoins une ou plusieurs sorties par lesquelles passent les fibres optiques 2 de raccordement. Du fait que le générateur d'énergie lumineuse 4 peut être situé à une distance appréciable de la bille dépolie 1, il peut être d'un type classique et offrir les avantages suivants:

— puissance grâce à des dimensions importantes;
— réglage en intensité en fonction des besoins spécifiques;
— refroidissement;
— possibilité d'alimenter plusieurs sources à la fois;
— possibilité de créer différents types de rayonnements tels que monochromatique, modulé, etc.

La figure 2 représente en perspective un autre mode de réalisation de source lumineuse multidirectionnelle suivant la présente invention, à savoir une source lumineuse multidirectionnelle composite comprenant cinq sources lumineuses élémentaires 10, 11, 12, 13 et 14, chacune étant identique à la source lumineuse illustrée à la figure 1. Quatre des cinq sources précédentes, 10, 11, 12 et 13 sont dans un même plan et sont situées dans ce plan deux à deux suivant deux axes de coordonnées rectangulaires: par exemple, les sources 10 et 12 sont disposées sur un axe XOX' et les sources 11 et 13 sont disposées sur un axe YOY' perpendiculaire à l'axe XOX'. Dans ces conditions la cinquième source élémentaire 14 est disposée sur un axe OZ formant un trièdre trirectangle avec les axes XOX' et YOY' précédemment définis. Le générateur d'énergie lumineuse 4 de la figure 3 qui alimente les cinq sources lumineuses élémentaires 10 à 14 peut être aisément logé à l'intérieur d'une coupole cylindrique mobile 15 qui supporte les cinq sources lumineuses.

La figure 4 illustre un exemple d'application suivant lequel on mesure la position et l'orientation de l'extrémité d'un ensemble polyarticulé tel qu'un robot 22. A cet effet la mesure s'effectue à l'aide de deux théodolites 20, 21 qui permettent, après un calcul approprié, de donner la position x, y, z, dans un référentiel choisi, d'un point lumineux tel que la bille 1 de la source lumineuse multidirectionnelle 14 portée par la coupole mobile 15 constituant l'extrémité du robot 22 suivant la représentation de la figure 4, source lumineuse située dans l'espace de mesure.

Pour cette opération, il faut, en plus de la position, déterminer l'orientation. Pour celà on utilise une cible multisources 15 à cinq sources dont trois seulement sont nécessaires. Mais, étant donné que suivant les positions de l'extrémité mobile 15, les zones ne sont pas toutes visables à chaque instant par les théodolites, il est nécessaire d'augmenter le nombre de sources. Une cible multisources 15 à cinq sources donne entière satisfaction.

## Revendications

1. Cible lumineuse prévue pour être utilisée en métrologie optique dans le domaine des mesures tridimensionnelles, caractérisée en ce qu'elle comprend au moins une source lumineuse multidirectionnelle élémentaire comprenant une fibre optique contenue sur une partie de sa longueur dans un tube métallique (3) rigide de faible épaisseur et un renflement constitué d'une bille (1) dépolie, faite en une substance capable de transmettre dans de bonnes conditions les rayons lumineux d'une gamme de longueurs d'onde déterminée, emmanchée et collée (7) sur l'extrémité libre de ladite fibre optique (2), ladite bille (1) étant en polystyrène non expansé, et possédant un diamètre de l'ordre de 0,5 mm, le diamètre de la fibre optique (2) étant de l'ordre de 0,2 mm.

2. Cible lumineuse selon la revendication 1, caractérisée en ce qu'elle comprend cinq sources lumineuses multidirectionnelles élémentaires, quatre de ces sources élémentaires étant situées dans un plan deux à deux suivant deux axes de coordonnées rectangulaires, la cinquième source élémentaire étant disposée suivant l'axe perpendiculaire aux deux axes de coordonnées rectangulaires précédents en leur point d'intersection.

3. Méthode de mesure de la position de l'orientation de l'extrémité d'un ensemble polyarticulé tel qu'un robot, du type comportant l'utilisation de deux théodolites, caractérisée en ce qu'elle comporte l'utilisation d'une cible lumineuse selon l'une des revendications précédentes fixée à ladite extrémité de l'ensemble polyarticulé afin de permettre la mesure par triangulation optique.

## Patentansprüche

1. Leuchtendes Zielobjet, vorgesehen zur Verwendung in der optischen Meßtechnik im Bereich der dreidimensionalen Meßtechnik, dadurch gekennzeichnet, daß es wenigstens eine elementare in mehrere Richtungen weisende Lichtquelle aufweist, mit einer optischen Faser, von der ein Längsteil in einem steifen, metallischen Rohr (3) geringer Dicke angeordnet ist und mit einer Verdickung, die aus einer matten Kugel (1) besteht, die aus einer Substanz gefertigt ist, welche unter guten Bedingungen das Übertragen von Lichtstrahlen eines vorgegebenen Wellenlängenbereichs ermöglicht und die auf das freie Ende der optischen Faser (2) aufgepreßt und aufgeklebt (7) ist, wobei die Kugel (1) aus nicht-expandiertem Polystyren besteht und einen Durchmesser in der Größenordnung von 0,5 mm aufweist, während der Durchmesser der optischen Faser (2) in der Größenordnung von 0,2 mm liegt.

2. Leuchtendes Zielobjekt nach Anspruch 1, dadurch gekennzeichnet, daß es fünf elementare, in mehrere Richtungen weisende Lichtquellen aufweist, wobei vier dieser elementaren Quellen in einer Ebene angeordnet sind und jeweils zwei auf zwei rechtwinklig zueinander liegenden Koordinatenachsen und die fünfte Elementarquelle auf einer Achse angeordnet ist, die senkrecht zu den beiden genannten rechtwinkligen Koordinatenachsen in deren Schnittpunkt ist.

3. Verfahren zur Messung der Position der Ausrichtung des Endes eines vielfach beweglichen Aufbaus, wie z.B. eines Roboters, der Art, die die Verwendung zweier Theodoliten umfaßt, dadurch gekennzeichnet, daß es die Verwendung eines leuchtenden Zielobjektes nach einem der vorhergehenden Ansprüche umfaßt, das an dem Ende des vielfach beweglichen Aufbaus befestigt ist um so eine optische Dreiecksvermessung zu ermöglichen.

## Claims

1. A light target for use in optical metrology in the field of three-dimensional measuring operations, characterised in that it comprises at least one elementary multi-directional light source comprising an optical fibre which is contained over a portion of its length in a rigid metal tube (3) of small thickness and an enlargement formed by a dulled ball (1) made of a substance capable of transmitting the light rays of a given range of wavelengths, under good conditions, being fitted on to and stuck (7) to the free end of said optical fibre (2), said ball (1) being of non-expanded polystyrene and being of a diameter of the order of 0.5 mm, the diameter of the optical fibre (2) being of the order of 0.2 mm.

2. A light target according to claim 1 characterised in that it comprises five elementary multi-directional light sources, four of said elementary sources being disposed in a plane in pairs on two axes of rectangular co-ordinates, the fifth elementary source being disposed on the axis that is perpendicular to the said two axes of rectangular co-ordinates at the point of intersection thereof.

3. A method of measuring the position of the orientation of the end of a polyarticulated assembly such as a robot, of the type comprising the use of two theodolites, characterised in that it comprises the use of a light target according to one of the preceding claims, which is fixed to said end of the polyarticulated assembly in order to permit measurement by optical triangulation.

Fig. 1

1

7

2

3

5

Fig. 2

1

10

15

14

1

13

1

11

1

12

1

1

*Fig:3*

4

2

*Fig:4*

10

11

22

14

15

Z

Y

X

20

21